# EUROPEAN PATENT SPECIFICATION

(11) **EP 3 260 853 B1**
(45) Date of publication and mention of the grant of the patent: **11.03.2020**
(21) Application number: 17179095.9
(22) Date of filing: 27.03.2009
(51) Int. Cl.: G01N 27/12, G01N 27/22, G01N 33/553, G01N 33/48, G01N 27/327, G01N 33/543

(54) **A SENSOR DEVICE AND A METHOD OF MANUFACTURING THE SAME**
SENSORVORRICHTUNG UND VERFAHREN ZUR HERSTELLUNG DAVON
DISPOSITIF DE CAPTEUR ET SON PROCÉDÉ DE FABRICATION

(43) Date of publication of application: 27.12.2017
(62) Divisional of application: 09156546.5
(73) Proprietor: ams International AG, 8640 Rapperswil-Jona (CH)
(72) Inventor: Humbert, Aurelie, 5656 AE Eindhoven (NL); Lambert, Magali, 5656 AE Eindhoven (NL)
(74) Representative: Epping - Hermann - Fischer

(56) References cited:
- EP-A- 2 023 140
- WO-A-02/078947
- WO-A-2008/092210
- WO-A1-01/83674
- US-A1- 2006 040 276
- DANIEL BERDAT ET AL: "Label-free detection of DNA with interdigitated micro-electrodes in a fluidic cell", LAB ON A CHIP, vol. 8, no. 2, 22 November 2007 (2007-11-22), pages 302-308, XP055209509, ISSN: 1473-0197, DOI: 10.1039/B712609C
- DHARUMAN V ET AL: "Label-free impedance detection of oligonucleotide hybridisation on interdigitated ultramicroelectrodes using electrochemical redox probes", BIOSENSORS AND BIOELECTRONICS, vol. 21, no. 4, 30 January 2005 (2005-01-30), pages 645-654, XP027619355, ELSEVIER BV, NL ISSN: 0956-5663 [retrieved on 2005-10-15]
- MORENO-HAGELSIEB L ET AL: "Electrical detection of DNA hybridization: Three extraction techniques based on interdigitated Al/Al(2)O(3) capacitors", BIOSENSORS AND BIOELECTRONICS, vol. 22, no. 9-10, 15 April 2007 (2007-04-15), pages 2199-2207, XP002428333, ELSEVIER BV, NL ISSN: 0956-5663, DOI: 10.1016/J.BIOS.2006.10.024
- ANDREW CAMPITELLI AND ELS PARTON: "Marrying ICs and biotech", BIOMEMS, EDITION, SOLID STATE TECHNOLOGY, 1 July 2002 (2002-07-01), pages 87-88,90,92, XP001125803,
- MORENO-HAGELSIEB L ET AL: "Sensitive DNA electrical detection based on interdigitated Al/Al"2O"3 microelectrodes", SENSORS AND ACTUATORS B: CHEMICAL: INTERNATIONAL JOURNAL DEVOTED TO RESEARCH AND DEVELOPMENT OF PHYSICAL AND CHEMICAL TRANSDU, vol. 98, no. 2-3, 15 March 2004 (2004-03-15), pages 269-274, XP004493688, ELSEVIER BV, NL ISSN: 0925-4005, DOI: 10.1016/J.SNB.2003.10.036
- CARRARA S ET AL: "Label-free cancer markers detection by capacitance biochip", SENSORS AND ACTUATORS B, vol. 136, no. 1, 2 February 2009 (2009-02-02), pages 163-172, XP025876181, , ELSEVIER SEQUOIA S.A., LAUSANNE, CH ISSN: 0925-4005 [retrieved on 2008-10-15]
- ZOU ET AL: "Functionalized nano interdigitated electrodes arrays on polymer with integrated microfluidics for direct bio-affinity sensing using impedimetric measurement", SENSORS AND ACTUATORS A, vol. 136, no. 2, 6 May 2007 (2007-05-06), pages 518-526, XP022062627, ELSEVIER SEQUOIA S.A., LAUSANNE, CH ISSN: 0924-4247
- PYUN ET AL: "New immobilization method for immunoaffinity biosensors by using thiolated proteins", ANALYTICAL BIOCHEMISTRY, vol. 347, no. 2, 15 December 2005 (2005-12-15), pages 227-233, XP005176356, ACADEMIC PRESS INC, NEW YORK ISSN: 0003-2697
- BIEMMI E ET AL: "Direct growth of Cu3(BTC)2(H2O)3.xH2O thin films on modified QCM-gold electrodes - Water sorption isotherms", MICROPOROUS AND MESOPOROUS MATERIALS, vol. 114, no. 1-3, 1 September 2008 (2008-09-01), pages 380-386, XP022736300, ELSEVIER SCIENCE PUBLISHING, NEW YORK, US ISSN: 1387-1811 [retrieved on 2008-01-26]
- KIKUCHI M ET AL: "Recognition of terpenes using molecular imprinted polymer coated quartz crystal microbalance in air phase", SCIENCE AND TECHNOLOGY OF ADVANCED MATERIALS, vol. 7, no. 2, 1 March 2006 (2006-03-01), pages 156-161, XP025228604, ELSEVIER, OXFORD, GB ISSN: 1468-6996 [retrieved on 2006-03-01]
- A. KUMAR ET AL.: "Patterned Condensation Figures as Optical Diffraction Gratings", SCIENCE, vol. 263, 7 January 1994 (1994-01-07), pages 60-62, XP002555160,

## Description

### FIELD OF THE INVENTION

The invention relates to a sensor device.

Moreover, the invention relates to a method of manufacturing a sensor device.

### BACKGROUND OF THE INVENTION

A sensor device may be denoted as a device which may be used for the detection of an analyte. Depending on the analyte to be detected, on the phenomenon on which the detection is based, and/or on implemented sensing components the sensor may be, for example, a humidity sensor, a gas sensor, a biosensor, etc..

The invention refers to a sensor device configured as a biosensor and a method of manufacturing the same.

A humidity sensor, for instance, may be based on the phenomena that absorption and/or capture of water vapor particles, for example, by a material comprised in the humidity sensor may change the electrical properties of the sensing component which can be detected as the sensor event.

A gas sensor, for instance, may be based on the phenomena that a selective absorption and/or capture of gas particles, for example, by a material comprised in the gas sensor may change the electrical properties of the sensing component which can be detected as the sensor event.

A biosensor may be based on the phenomenon that capture particles immobilized on a surface of a biosensor, may selectively attach with target particles in, for instance, a fluidic sample. When such attachment or sensor events occur at the sensor surface, this may change the electrical properties of the surface which can be detected as the sensor event.

US 4,429,343 discloses a humidity sensing element of the capacitance sensing type having two sets of interdigitated fingers of thin film platinum deposited on a glass substrate, all covered by a coating of water absorbing material such as cellulose acetate butyrate or a silicone rubber. The coating is of thickness such that it is substantially equal to or greater than the period of the fingers of the interdigitated electrodes.

Conventional sensor devices such as a biosensor may be difficult and expensive to integrate in chips due to expensive additional production procedures, which procedures are necessary for the integration.

Article "Label-free detection of DNA with interdigitated micro-electrodes in a fluidic cell", Daniel Berdat et al., describes interdigitated microelectrodes. A biochip comprises four interdigitated micro-electrode sensors. Finger-like structures are fabricated on a 500 µm thick float-glass substrate. The DNA layer is positioned on the substrate.

Article "Label-free impedance detection of oligonucleotide hybridisation on interdigitated ultramicroelectrodes using electrochemical redox probes", V. Dharuman et al., refers to ultra-microelectrodes. The ultra-microelectrodes have the form of interdigitated electrodes. The interdigitated electrodes are fabricated as gold electrodes and are arranged at a surface of a silicon oxide layer which is on a silicon substrate. Each silicon chip consists of four interdigitated electrode pairs. Thiol-modified oligodeoxynucleotides (ODNs) are immobilized on a surface of the gold electrodes by self-assembling.

Article "Electrical detection of DNA hybridization: Three extraction techniques based on interdigitated Al/Al203 capacitors", L. Moreno-Hagelsieb et al., elucidates an interdigitated capacitive sensor realized on a passivated silicon substrate.

Article "BioMEMS: Marrying ICs and biotech", A. Campitelli and E. Parton, describes different examples of bioMEMS and biosensor systems. For example, SAW-based sensors comprise single crystal piezoelectric materials such as quartz and thin piezoelectric films such as AlN. Specific antibodies are positioned on a rectangular gold layer that is positioned on the piezoelectric material. Interdigitated structures are positioned on both sides of the gold plate to generate and detect an electromechanical wave. Another example of biosensors refers to interdigitated electrode structures for nucleic acid hybridization detection. The interdigitated electrode structures are realized by a combination of plastics precision molding and evaporation of thin metal layers. A further kind of biosensor is configured as a differential microcalorimetry tool in microplate format.

Article "Sensitive DNA electrical detection based on interdigitated Al/Al203 microelectrodes", L. Moreno-Hagelsieb et al., describes the detection of DNA with interdigitated electrodes. The microelectrodes form interdigitated electrode capacitive sensors. A self-assembled silane layer is attached to a support.

Document WO 01/83674 A1 is related to a biological identification system with integrated sensor chip. A microelectromechanical system and integrated circuit based biosensor is cable of sensing or detecting various ionic molecules and macromolecules (DNA, RNA and protein).

### OBJECT AND SUMMARY OF THE INVENTION

It is an object of the invention to provide for a sensor device with a proper sensitivity, which sensor device is easy to manufacture at a low cost in a high volume production.

In order to achieve the object defined above, a sensor device and a method of manufacturing a sensor device according to the independent claims are provided.

According to an example, a sensor device (for instance a monolithically integrated sensor chip) for sensing particles (for instance biological molecules) is provided, the sensor device comprising a substrate and a sensor active region arranged in and/or on the substrate and being sensitive to the presence of the particles to be detected, wherein the sensor active region comprises a metallic carrier (for instance electrodes) and a self assembled monolayer (SAM) positioned directly (particularly without any material between the SAM and the metallic carrier) on the metallic carrier.

According to an example, a method of manufacturing a sensor device is provided, the method comprising providing a substrate, arranging a sensor active region in and/or on the substrate to be sensitive to the presence of the particles to be detected, wherein the arranging of the sensor active region comprises forming a metallic carrier and positioning a self assembled monolayer directly on the metallic carrier.

The term "sensor" may particularly denote any device which may be used for the detection of an analyte. Examples for sensors which may be realized are biosensors, pH sensors etc.

The term "biosensor" may particularly denote any device which may be used for the detection of an analyte comprising biological particles such as DNA, RNA, proteins, enzymes, cells, bacteria, virus, etc. A biosensor may be used, for example, to measure a concentration of bio-particles in a fluidic sample comprising biological material. A biosensor may combine a biological component (for instance capture particles at or in a SAM capable of detecting particles) with a physicochemical or physical detector component (for instance a capacitor having an electric characteristic which is modifiable by a sensor event).

The term "sensor chip" may particularly denote a sensor built with the help of micro- or nano-technologies like lithography, etch or deposition techniques. It may particularly denote an integrated circuit, that is to say an electronic chip, particularly in semiconductor technology, more particularly in silicon semiconductor technology, still more particularly in CMOS technology. A monolithically integrated sensor chip has the property of very small dimensions due to the use of micro- or nano-processing technology, and may therefore have a large spatial resolution and a high signal-to-noise ratio particularly when the dimensions of the sensor chip or more precisely of components thereof approach or reach the order of magnitude of micrometers or less, for instance in case of a biosensor reaching the dimensions of biological particles.

The term "sensor active region" may particularly denote a region of a sensor which may be functionally coupled with an analyte such as a fluidic sample so that a detection event may occur in vicinity of the sensor active region. In other words, the sensor active region may be influenced by processes which take place in case of a sensing event. A corresponding sensing principle may be a characteristic change of the electric properties of the sensor active region in the presence of particles to be detected.

The term "substrate" may denote any suitable material, such as a semiconductor, glass, plastic, etc. According to an example, the term "substrate" may be used to define generally the elements for layers that underlie and/or overlie a layer or portions of interest. Also, the substrate may be any other base on which a layer is formed.

The term "sample" may particularly denote any subset of the phases of matter. Such samples may include liquids, gases, plasmas and, to some extent, solids, as well as mixtures thereof. For instance, the sample may be an inorganic, an organic, and/or a biological substance.

The term "particle" may particularly denote a molecule (for instance an inorganic molecule, an organic molecule), a biological particle (for instance DNA, RNA, a protein, an amino acid, a bacteria, a virus), a bead, a nano-bead, a nano-tube, etc.

The term "self assembled monolayer" (SAM) may particularly denote an organized layer of adsorbate molecules, which may be hydrophilic and hydrophobic, for instance amphiphilic, in which one part of the molecule, a "head group", may show a special affinity for a substrate. The other part of the molecule may comprise a functional hydrophobic group, a hydrophobic "tail group" at its terminal end. SAMs may be created by the chemisorption, which in general is an adsorption characterized by a strong interaction between an adsorbate and a carrier surface, of hydrophilic head groups onto the carrier from either a vapor or liquid phase followed by a slow two-dimensional organization of the hydrophobic tails. Initially, adsorbate molecules form a disordered mass of molecules or form a so called "lying down phase", in which phase the molecules are oriented in parallel to the carrier surface. Over a period of hours the adsorbate molecules may form crystalline or semicrystalline structures on the carrier surface. The hydrophilic head groups assemble together on the carrier surface, while the hydrophobic tail groups assemble away from the carrier. Areas of close-packed molecules nucleate and grow until the carrier surface is covered by a single monolayer. Hence, the formation of a SAM proceeds from a disordered mass of molecules or a "lying down phase" to a highly ordered layer, for instance a thin film layer. The adsorbate molecules adsorb readily because they lower the surface energy of the carrier and are stable due to the strong chemisorption of the "head groups." The corresponding bonds may create stable monolayers of a very accurate thickness. For example, thiol-metal bonds are of the order of 100 kJ/mol, in particular 167.5 kJ/mol for the S-Au bond or 231 kJ/mol for the S-Cu bond. This makes the bonds stable in a wide variety of temperatures, solvents and potentials. The SAM packs tightly due to van der Waals interactions, thereby reducing its own free energy. The adsorption can be described by the Langmuir adsorption isotherm if lateral interactions are neglected. If they cannot be neglected, the adsorption can be better described by the Frumkin isotherm.

The above described process may be referred to as a molecular self assembly process. In general any layer of a material resulting from the molecular self assembly process may be referred to as a SAM.

Carriers on which SAMs may assemble can be produced through, for example, chemical vapor deposition (CVD), plasma enhanced chemical vapour deposition (PECVD), physical vapor deposition (PVD), atomic layer deposition (ALD), sputtering, electrodeposition or electroless deposition. SAMs, for example alkane thiol SAMs can be produced by an adsorption by immersing the carrier into a dilute solution of alkane thiol in ethanol for 1 to 72 hours at room temperature and dried with nitrogen. SAMs can also be adsorbed from the vapor phase. For example, chlorosilane SAMs (which can also be adsorbed from the liquid phase), can be created in a reaction chamber by a silanization in which a silane vapor flows over the carrier to form the SAM monolayer. Carrier materials can comprise metals. Metallic carries may comprise, for instance, Cu, Al, Ti, TiN, Au, Pt, Ag, W, TaN, Pd, Fe, Ni, Co, etc. On such metallic carriers, for example, simple alkanethiols (octadecanethiol, mercaptohexadecanoic acid, etc.), alkoxy alkanethiols [CH(3)(CH(2))(p-1)O(CH(2))(m)SH], alkanedithiol, perfluoroalkanesilanes (PFMS), amide-containing alkanethiol, dodecaneselenolate and decaneselelonate, octadecyltrichlorosilane, etc. can be positioned in form of a SAM.

It may be advantageous to use a SAM positioned directly on the metallic carrier in order to form the sensor active region. Because of their exposed 2-dimensional distribution, SAMs may have quite different chemical kinetics than the same molecules in another form. Therefore, SAMs may be used to achieve a proper sensitivity of the sensor device in an easy and effective way. Further, the positioning of the SAM on the metallic carrier can carried out very simply with a high precision by adding a solution of adsorbate molecules onto the substrate and washing of the excess. In contrary to the conventional sensor devices, the more complicated and expensive techniques such as a chemical vapor deposition or molecular beam epitaxy may be avoided when positioning adsorbate molecules directly on the metallic carrier.

The sensor device is compatible with CMOS technology due to the sensing active region comprising a self assembled monolayer positioned on the metallic carrier. As such, it may be very easily integrated in IC circuits at low costs in a high volume production. In particular, such a sensor device can be easily integrated in a chip comprising other on-chip data acquisition elements, such as electronics, coils, resistors, etc. that enable the sensor device to be operated in alternative to a direct measurement of the relevant electrical characteristic of the sensor device, which is characteristic is modifiable by a sensor event.

Also, such a sensor device can be easily integrated in a sensor array integrated in a chip. This means that the sensor device can advantageously be combined with other sensors, for instance, a pH sensor, CO₂ sensor, etc. in a chip manufactured in CMOS. Such a chip may advantageously comprise also all necessary control loops.

Next, further examples of the sensor device will be explained. However, these examples also apply to the method of manufacturing a sensor device.

The sensor device may further comprise an electric connection structure (for instance for supplying electric signals and/or power from a periphery device to the sensor device and/or for supplying electric signals from the sensor device, particularly an electric sensor signal indicative of a sensor event, to an on-chip or off-chip periphery device) arranged on or in a surface portion of the substrate and adapted for an electric connection to an electric connection element (for instance to be electrically coupled to an on-chip of off-chip periphery device). The sensor device may further also comprise a heater and/or a temperature sensor, which may be integrated, for instance, in the substrate. The heater and/or the temperature sensor may be used, for example, when the sensor device requires a high operational temperature.

According to an example, the sensor device is a capacitive sensor device with a capacitor having a capacitance depending on the particles being detected, wherein the metallic carrier forms at least a part of the capacitor. For instance, the capacitance may depend on the concentration of the particles being detected. Thus, the metallic carrier can be formed as capacitor electrodes and, for example, a dielectric SAM positioned on the capacitor electrodes can form a dielectric layer of the capacitor. If present, particles to be detected can be captured by the SAM, absorbed by the SAM and/or they can chemically react (for instance in a reversible or an irreversible way) with the SAM. As a result of such a sensor event, dielectric properties of the SAM can change in a characteristic and reproducible manner. Hence, due to a presence of particles to be detected the capacitance of the capacitor can change correspondingly. The change of the capacitance indicating a sensor event can be detected and a corresponding electric signal indicative of the sensor event from the sensor device, particularly an electric sensor signal indicative of a sensor event, can be supplied to a periphery device. Hence, a very reliable and accurate sensor device can be provided for.

According to an example, the sensor device is a resistive sensor device with a resistor (for instance an ohmic resistor) having a (for instance ohmic) resistance the particles being detected, wherein the metallic carrier forms at least a part of the resistor. For instance, the resistance may depend on the concentration of the particles being detected. Thus, the metallic carrier with, for example, an electrically conductive or a resistive SAM assembled on it can form, for instance, a conductor or a resistor line. If present, particles to be detected can be captured by the SAM, absorbed by the SAM and/or they can chemically react (for instance in a reversible or irreversible way) with the SAM. As a result of such a sensor event, the conductive/resistive properties of the SAM can change. Hence, due to a presence of particles to be detected, for instance, the resistance of the resistor can change correspondingly. The change of the resistance indicating a sensor event can be detected and a corresponding electric signal indicative of the sensor event from the sensor device, particularly an electric sensor signal indicative of a sensor event, can be supplied to a periphery device. Additionally or alternatively to an ohmic resistor, the resistor may comprise capacitive and/or inductive contributions.

According to an example, the sensor active region comprises a resonance circuit with a resonance frequency depending on particles being detected, wherein the metallic carrier forms at least a part of the resonance circuit. For instance, the frequency may depend on the concentration of the particles being detected. Thus, the metallic carrier can be an LC coil, i.e. a coil comprising an inductor and a capacitor, or an antenna coil with a SAM assembled on it. For example, the metallic carrier can be a tag antenna of a Radio-Frequency Identification (RFID) tag, in which case the tag antenna in addition of its usual monitoring function may be used as a sensing element. If present, particles to be detected can be captured by the SAM, absorbed by the SAM and/or they can chemically react with the SAM. As a result of such a sensor event for instance dielectric properties of the SAM can change. Hence, due to a presence of particles to be detected the capacitance and hence also the resonance frequency of the resonance circuit can change correspondingly. The change of the resonance frequency indicating a sensor event can be detected in a passive or active way, and a corresponding electric signal indicative of the sensor event from the sensor device, particularly an electric sensor signal indicative of a sensor event, can be supplied to a periphery device. For example, a shift and/or drift of the resonance frequency of the resonance circuit can be measured passively as a change in low impedance reflected back to an external antenna. If the antenna is a tag antenna, there may be, due to size limitation of the RFID tag and a low output power, no need to include a passive filtering on the tag RF front end. The tag antenna may be connected to a front end low noise amplifier and/or a memory device. This can be done in CMOS technology. To this end the antenna may be adapted in order to allow an impedance matching, for instance to 50 Ohms. The sensor device according to this example can be advantageously used in applications such as monitoring of pharmaceutical, biomedical, food/beverage storage and/or logistics. For example, a tag antenna of an RFID tag may be used, when covered with a SAM, not only for the usual monitoring purposes, but also for purposes of sensing particles.

According to an example, the self assembled monolayer may be arranged on an upper surface and on a side surface of the metallic carrier. The upper surface of the metallic carrier may be defined, with respect to the substrate, as the more distant surface of two surfaces of the metallic carriers, which two surfaces are parallel to a basis of the substrate. Hence, in this example all surfaces of the metallic carrier, which surfaces have no interface with substrate can be covered by the SAM. For instance, a metal layer may be deposited on the substrate and may be patterned for example by lithography and etching. This may result in the formation of island-shaped metallic components having the exposed upper surface opposing a low surface in direct contact with the substrate and having the side surface delimiting the metallic component. Such a sensor device may be manufactured very easily and accurately, due to simplicity of the process in which the SAM is positioned on the upper surface and on a side surface of the metallic carrier.

According to an example, the sensor device further comprises a dielectric structure covering a side surface of the metallic carrier. For example, a sensor device with a continuous dielectric layer covering the side surface but not the upper surface of the metallic carrier can be provided. The continuous dielectric layer can extend vertically (with respect to a base of the substrate) up to a height less or greater or equal to the height of the metallic carrier. The continuous dielectric layer can also be formed as a stack of dielectric layers. The continuous dielectric layer may comprise SiO₂, SiOC, SiN, SiCN, Ta₂O₅, Al₂O₃, Nb₂O₅, ZrO₂, TiO₂, etc. Due to the additional dielectric structure and the sensing properties and the robustness of the sensor device may be increased.

According to an example, the self assembled monolayer is deposited on an upper surface of the metallic carrier not covered by the above mentioned dielectric layer. Hence, in this example the sensor device uses both the continuous dielectric layer and the SAM. In this respect the SAM can be seen as an enhancement of a conventional sensor device. Such a combination of layers can advantageously enhance sensing properties of the sensor device.

According to an example, the metallic carrier comprises one of the group consisting of a planar metallic layer and a patterned metallic layer in and/or on the substrate. Hence, depending on the particles being detected, on desired sensitivity range and sensitivity accuracy and on sensing principle used, the metallic carriers can be designed optimally.

According to an example, the metallic carrier comprises interdigitated electrodes. Hence, for example the metallic carrier can be patterned as two interdigitated electrodes that can be positioned in the same plane, with the SAM positioned at least on some parts of the surfaces of the interdigitated electrodes. The interdigitated electrodes can form, for example, a comb-comb structure and may therefore functionally cooperate with one another. The two interdigitated electrodes may or may not comprise the same metallic material. Such a structure can advantageously be used in a capacitive sensor device. The capacitance can be measured between two interdigitated electrodes. To this end, the electrodes can comprise bonding pads for a connection of the sensor device to a capacitance measuring device.

According to an example, the metallic carrier comprises one of the group consisting of a meander-shaped line, a zig-zag-shaped line, and spiral line. Such an arrangement of the metallic carrier patterned on or in the substrate can be advantageous in a resistive sensor device. The resistance can be measured, for instance between two bonding pads on the meander-shaped line, by any conventional method on the meander-shaped line. Hence, the shape of the metallic carrier line can be designed optimally, depending on the particles being detected, on desired sensitivity range and sensitivity accuracy and on the selected manufacturing process. Also, the metallic carrier line can be optimally designed depending on the sensing principle being used. For, example a meander-shaped line, zig-zag-shaped line or a spiral line may advantageously be used in a resistive sensor device. Also, a spiral line may advantageously be used in a sensor device using an antenna.

According to an embodiment, the metallic carrier comprises a meander-shaped line and interdigitated electrodes, wherein the meander-shaped line having a plurality of loops and the comb-shaped interdigitated electrodes having a plurality of fingers extending from a base strip, wherein the fingers of the interdigitated electrodes extend between the loops. Hence, the metallic carrier may take a form of a meander-comb structure. The meander-comb structure can be referred to as a meander-fork structure too. Hence, for example the metallic carrier can be patterned as two interdigitated comb-shaped electrodes and a third meander-shaped electrode may be positioned between comb fingers of the two interdigitated electrodes, wherein the three electrodes can be positioned in the same plane. Advantageously, such a sensor device can be at the same time a capacitive and a resistive sensor device. The meander-shaped electrode may comprise the same metallic material as the comb-shaped electrodes. However, the meander-shaped electrode may comprise different metallic material as the comb-shaped electrodes. The meander-shaped electrode may be covered by the same SAM material as the comb-shaped electrodes. However, the meander-shaped electrode may be covered by a different SAM material as the comb-shaped electrodes. The capacitance can be measured between one of the comb-shaped electrodes and the meander-shaped electrode, whereas the resistance can be measured on the meander-shaped line. To this end, the one of the comb-shaped electrodes and the meander-shaped electrode can comprise respective bonding pads for a connection of the sensor device to capacitance/resistance measuring devices.

According to an example, the sensor device is adapted a sensor chip, particularly as a sensor chip manufactured in CMOS technology. Hence, the sensor device can be adapted as a microsensor. CMOS technology, particularly the latest generation thereof, allows manufacturing structures with very small dimensions. A CMOS process may be a preferred choice. The sensor device may be monolithically integrated on the basis of a semiconductor substrate, particularly comprising one of the group consisting of a group IV semiconductor (such as silicon or germanium), and a group III-group V semiconductor (such as gallium arsenide). The sensor device may be formed starting with a purely crystalline silicon wafer or an SOI wafer (Silicon On Insulator). The metallic carrier can be formed as one or more nanoelectrodes. When the sensor active region comprises a nanoelectrode, the dimensions of the electrode may be in the order of magnitude of nanometers, for instance may be less than 300 nm, for instance may be less or equal than 250 nm, or may be less or equal than 130 nm. The closer the size of the nanoelectrodes to the size of particles to detect is, the more sensitive the resulting sensor can be. If the sensor active region comprises an antenna, the antenna can be a printed antenna, in particular a patch antenna. The size of the antenna may depend on the operating frequency (frequencies) of the antenna. Sensor devices compatible with advanced CMOS technology are easy to integrate in IC circuits at low costs in a high volume production. In particular such a sensor device can be easily integrated in a sensor array integrated in a chip. This means that the sensor device can advantageously be combined with other sensors, for instance, a pH sensor, CO₂ sensor, etc. in a chip manufactured in CMOS. Such a chip can advantageously comprise also all necessary control loops.

According to an embodiment, the sensor device is adapted as a biosensor. A biosensor may be or may be part of a multifunctional sensor device (for instance, a sensor array), a sensor readout device, a lab-on-chip, a sample transport device, a sample mix device, a sample washing device, a sample purification device, a sample amplification device, a sample extraction device or a hybridization analysis device. A biosensor used in an RFID tag may be an example of a sensor device integrated in a chip comprising other on-chip data acquisition elements, such as electronics, coils, resistors, etc. that enable the sensor device to be operated in alternative to a direct measurement of the relevant electrical characteristics, for instance the capacitance. For example, a tag antenna of an RFID tag may be used, when covered with a SAM, not only for the usual monitoring purposes, but also for bio sensing. Further applications, such as pH sensing can be implemented too.

A biosensor may be implemented in any kind of life science apparatus. A biosensor or any array of such sensors may be used, for example, in a facility management system.

Next, further examples of the method will be explained. However, these examples also apply to the sensor device.

According to an embodiment, the method may further comprise forming a dielectric structure covering side surface of the metallic carrier. Such an additional dielectric structure may enhance sensing properties of the sensor device and increase its robustness.

The method may further comprise forming bonding pads.

The method may further comprise connecting the sensor device to an on-chip or an external measuring device.

The forming of the dielectric layer may comprise patterning the dielectric layer.

The forming of the metallic carrier may comprise patterning of the metallic layer.

Embodiments of the invention are not bound to specific materials, so that many different materials may be used. For conductive structures, it may be possible to use metallization structures, silicide structures or polysilicon structures. For semiconductor regions or components, crystalline silicon may be used. For insulating portions, silicon oxide or silicon nitride may be used.

Any process technologies like CMOS, BIPOLAR, BICMOS may be implemented. Micro- and nano-technologies like lithography, etch or deposition techniques may be implemented.

The aspects defined above and further aspects of the invention are apparent from the examples of embodiment to be described hereinafter and are explained with reference to these examples of embodiment.

### BRIEF DESCRIPTION OF THE DRAWINGS

Aspects of the invention will be described in more detail hereinafter with reference to examples of embodiment but to which the invention is not limited.
Fig. 1 illustrates an example of a top view of a sensor device.
Fig. 2 illustrates an example of a cross-sectional view of a sensor device.
Fig. 3 illustrates a top view of a comb-meander structure of a metallic carrier of a sensor device according to an example of the invention.
Fig. 4a to Fig. 4c illustrate examples a top view of different antenna coil shapes of a sensor device.
Fig. 5 illustrates an example of a perspective view of an antenna coil of a sensor device.
Fig. 6 illustrates an example of a top view of an antenna coil of a sensor device.
Fig. 7a to Fig. 7d illustrate different layer sequences during a method of manufacturing a sensor device according to an example of the invention.
Fig. 8 and Fig. 9 illustrate in cross-sectional views examples of different layers of sensor devices.
Fig. 10 illustrates an example of a positioning of a SAM on a metallic carrier.

### DESCRIPTION OF EMBODIMENTS

The illustration in the drawing is schematical.

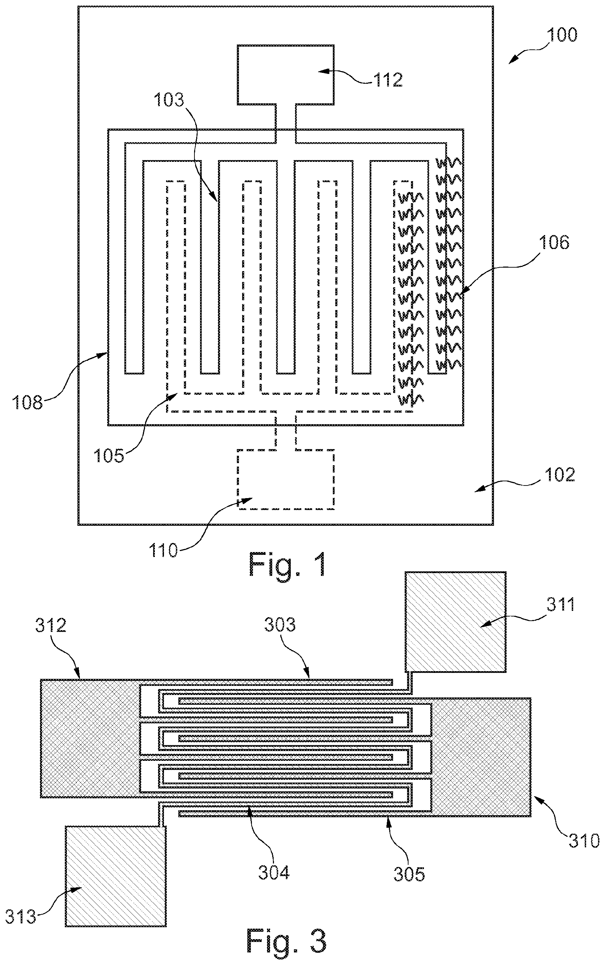

**Fig. 1** illustrates an example of a sensor device 100 for detecting particles.

The sensor device 100 is an example of a capacitive sensor device. In the described example, the sensor device 100 is a humidity sensor, although the sensor device 100 can be configured as a gas sensor or a biosensor as well.

The sensor device 100 comprises a substrate 102 and a sensor active region 108 arranged in and/or on the substrate 102. The sensor active region 108 comprises a metallic carrier, which is formed by two interdigitated electrodes 103 and 105, and a self assembled monolayer 106 positioned directly on the electrodes 103 and 105. In Fig. 1, for reasons of clearness, only a part of the SAM is indicated explicitly. For example, surfaces of the electrodes 103 and 105 may be covered by the SAM 106 completely. Each of the electrodes 103 and 105 is a comb-shaped electrode, so that the electrodes 103 and 105 form a cooperating comb-comb structure with a strong capacitive coupling between electrodes 103 and 105. However, also non-patterned flat electrodes may be used. The electrodes 103 and 105 can comprise, for example, Cu, Al, Ti, TiN, Au, Pt, Ag, W, TaN, Pd, Fe, Ni, Co, etc. The SAM 106 can be any dielectric SAM capable to capture selectively water molecules. For example, the SAM 106 may comprise simple alkanethiols (octadecanethiol, mercaptohexadecanoic acid, etc.), alkoxy alkanethiols [CH(3)(CH(2))(p-1)O(CH(2))(m)SH], alkanedithiol, perfluoroalkanesilanes (PFMS), amide-containing alkanethiol, dodecaneselenolate and decaneselelonate, octadecyltrichlorosilane, etc. The SAM 106 forms an interactive component, i.e. the SAM 106 comprises capture particles at or in a sensor active layer capable of detecting particles, the electrodes 103 and 105 covered with the SAM 106 form in the case of the humidity sensor a physical detector component, i.e. a capacitor having a capacitance which is modifiable by a sensor event, such a capture of water particles. The sensor device is electrically connected to a capacitance measurement device (not shown) via bonding pads 110, 112. The thickness of the SAM 106 may be between, for instance, between 1 nm and 5 nm. However, the thickness of the SAM 106 can also be less than 1 nm. The electrodes 103 and 105 may be for instance less or equal than 300 nm, less or equal than 250 nm or less or equal than 130 nm. The entire sensor device 100 is manufactured in CMOS technology, in which case the substrate 102 can be any typical substrate used in CMOS technology, for instance a silicon substrate. The sensor device 100 may comprise also a heater and/or a temperature sensor (not shown), which may be integrated, for instance, in the substrate 102.

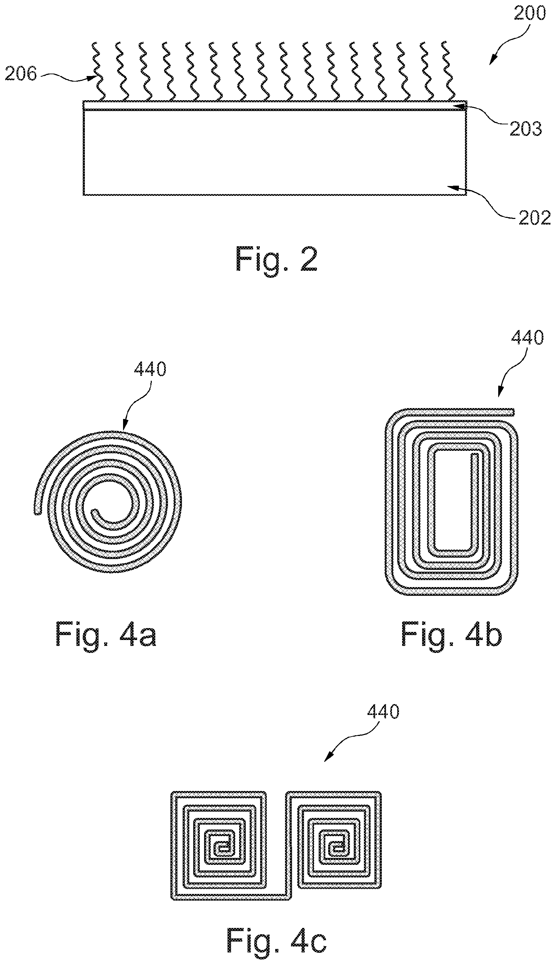

**Fig. 2** illustrates an example of a cross-sectional view of a sensor device 100. The sensor device 200 comprises a substrate 202, a metallic carrier 203 arranged on or in the substrate 202 and a SAM 206 positioned directly on the metallic carrier 203. In Fig. 2, the details concerning a possible patterning of the metallic carrier 203 are omitted for simplicity. Although present, bonding pads are not shown explicitly in Fig. 2.

**Fig. 3** illustrates a top view of a comb-meander structure of a metallic carrier of a sensor device according to an embodiment of the invention. The comb-meander structure comprises two comb-shaped interdigitated electrodes 303 and 305 having a plurality of comb fingers extending from a base strip and a meander-shaped electrode 304 having a plurality of loops, the loops being positioned in the coupling space between comb fingers of the comb-shaped electrodes 303 and 305. The sensor device comprising electrodes 303, 304 and 305 can be used as a capacitive sensor or a resistive sensor. The capacitance can be measured between one of the comb-shaped electrodes 303, 305 and the meander-shaped electrode 304, whereas the resistance can be measured on the meander-shaped line 304. A capacitance measuring device (not shown) can be connected to one of bonding one of boning pads 311 or 313 and to one of bonding pad 310 or 312. A resistance measuring device (not shown) can be connected to the bonding pads 311 and 313. Of course, the metallic carrier may comprise only the meander-shaped line 304, in which case the sensor device will be a resistive one. The capacitance/resistance device may measure the respective electrical characteristics of the of the sensor device either directly or indirectly.

**Fig. 4a** to **Fig. 4c** illustrate examples of a top view of different antenna coil shapes of a sensor device not covered by the claims. The top view shape of the antenna can have, for example, a form of a two-dimensional spiral, of a part of a two-dimensional spiral or a join of more two-dimensional spirals of parts of these. The term "two-dimensional spiral" may be used to denote any two-dimensional curve which emanates from a central point, getting progressively farther away as it revolves around the point. The antenna coil 440 shown on Fig 4a has form of a part of a circular spiral. The antenna coil 440 shown on Fig 4b has form of a part of a rectangular spiral with rounded corners. The antenna coil 440 shown on Fig 4c has form of a join of two square spirals.

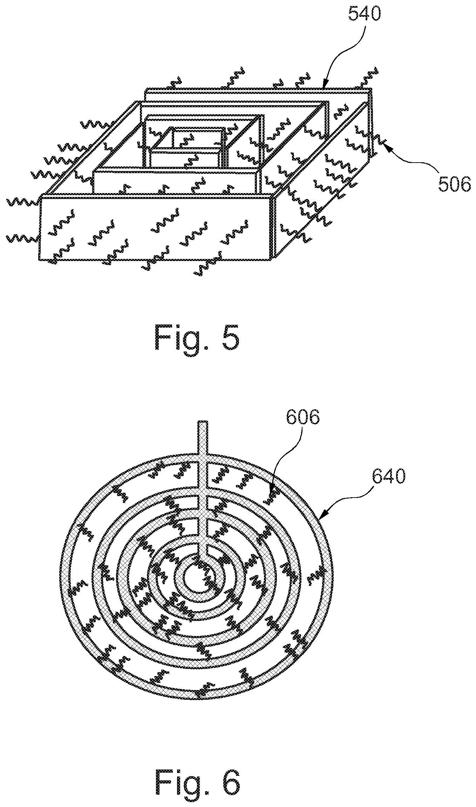

**Fig. 5** illustrates an example of a perspective view of an antenna coil of a sensor device not covered by the claims. The spiral antenna coil comprises a metallic carrier 540 and a SAM 506 positioned directly on upper and side surfaces of the metallic carrier.

**Fig. 6** illustrates an example of a top view of an antenna coil of a sensor device not covered by the claims. Here the top-view shape of the antenna coil, in particular of its metallic carrier 640, has a form of a system of concentric circles joined by a common segment. A SAM layer 606 is positioned directly on the metallic carrier 540.

For example, antennas discussed in relation to Figures 4a to 4c, 5 and 6 can be used as tag antennas of a Radio-Frequency Identification (RFID) tag. If present, particles to be detected can be captured by the SAM 506, 606, absorbed by the SAM 506, 606 and/or they can chemically react (for instance, in a reversible way) with the SAM 506, 606. As a result of such a sensor event, for instance, dielectric properties of the SAM 506, 606 can change.

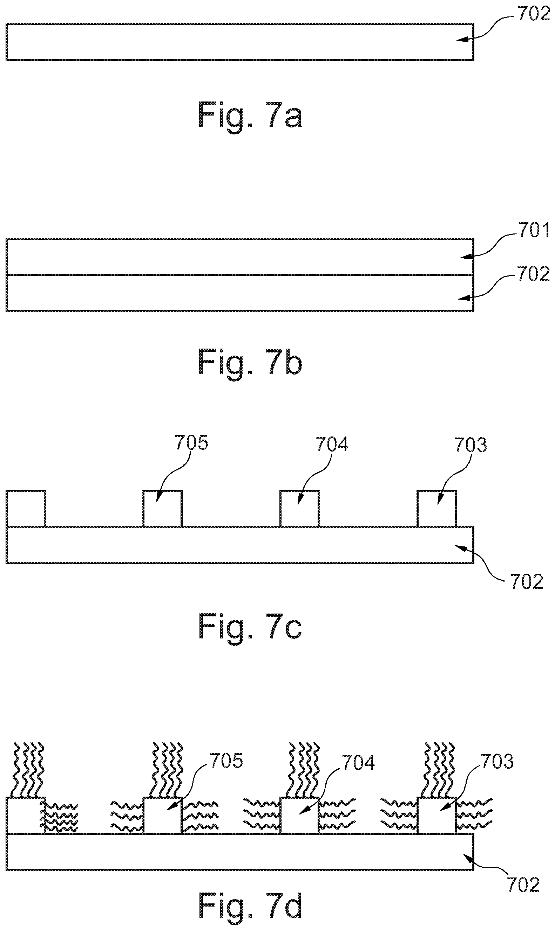

**Fig. 7a** to **Fig. 7d** illustrate different layer sequences during a method of manufacturing a sensor device 100 according to an embodiment of the invention.

According to this embodiment, a sensor device with patterned electrodes is manufactured. First a substrate 702 as shown on Fig. 7a is provided. Next a metal layer 701 is deposited on the substrate 702. The metal layer 701 is patterned as shown on Fig. 7c to form metallic carrier 703, 704 and 705. In Fig. 7c, forming of a meander-fork structure is shown, wherein two interdigitated electrodes 703 and 705 and a meander-shaped electrode 704 are shown in a particular cross-sectional view. As shown in Fig. 7d a SAM is positioned directly on the upper surface and on side surface of electrodes 703, 704 and 705.

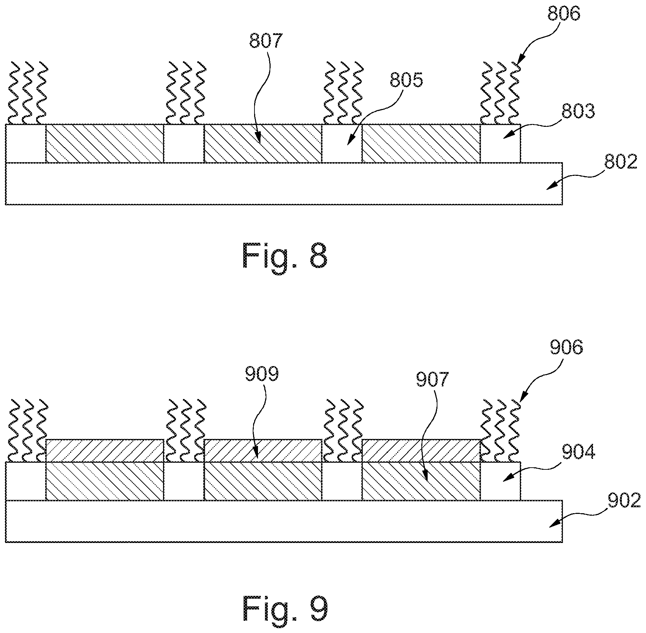

**Fig. 8** and **Fig. 9** illustrate in cross-sectional view examples of different layers of sensor devices. In these examples, the SAM can be seen as enhancing the sensitivity of a sensor device comprising a continuous dielectric layer.

In the example illustrated on Fig. 8 a dielectric layer 807, for instance a continuous dielectric layer, is positioned on a substrate 802 covering a part of the substrate surface, which part of the substrate surface has no interface with the metallic carrier 803 and 805. Fig.8 shows a capacitive sensor with two interdigitated electrodes 803 and 805 in a cross-sectional view. As can be seen, the dielectric layer 807 is positioned between the interdigitated electrodes 803 and 805, and covering their side surfaces completely. However, the side surface of the metallic carrier, here the side surfaces of the interdigitated electrodes 803 and 805, may be covered with the dielectric layer 807 only partially. A SAM 806 is positioned on the free surfaces of the metallic carrier, that is to say, on upper surfaces of the interdigitated electrodes 803 and 805 in the example illustrated on Fig. 8. Hence, the metallic carrier, in particular metallic electrodes can be buried in the dielectric layer 805 so that the upper surface of the metallic carrier 803, 805 and the upper surface of the dielectric layer 807 form a flat surface together.

Fig. 9 illustrates an example in which a dielectric layer is used, the dielectric layer comprising two parts 907 and 909 positioned on each other. The first part 907 of the dielectric layer is analogous to the dielectric layer 807 illustrated in the example of Fig. 8. The second part 909 of the dielectric layer covers the first part 907, so that a trench or a "cuvette" is formed over the metallic carrier. For concreteness, the metallic layer formed as a meander-shaped line 904 is shown a particular cross-sectional view in Fig. 9. The second part 909 of the dielectric layer can be formed from the same dielectric material as the first part 907 of the dielectric layer, for instance as a continuous extension of the latter. However, the second part 909 and the first part 907 of the dielectric layer may comprise different dielectric materials.

In an alternative manufacturing of a sensor device illustrated in Figure 9, the substrate 902 is provided first. Next, the two parts 907 and 909 of dielectric layer are positioned and patterned forming a trench over the substrate 902. Then the metallic carrier 904 is positioned in the trench. Hence, the metallic carrier is formed on the part of the substrate 902 free of the dielectric layer 907, 909 up to the height of the first part 907 of the dielectric layer. Further, a SAM 906 is positioned directly on the upper surface of the metallic carrier 904 so that the SAM is at least partially buried in a trench or a cuvette in the second part 909 of the dielectric layer above the metallic carrier 904.

The sensor device illustrated in Fig. 8 can be manufactured similarly. Again the substrate 802 is provided first. Next, the dielectric layer 807 is positioned and patterned forming a trench over the substrate 802. Then the metallic carrier 803, 805 is positioned in the trench up to the height of the dielectric layer 807. However, the metallic carrier 803, 805 may first be positioned in the trench with a height of the metallic carrier being 803, 805 being higher than the height of the dielectric layer 807 and planarized afterwards using, for instance, a chemical mechanical polishing (CMP). Further, a SAM 806 is positioned directly on the upper surface of the metallic carrier 803 and 805. Alternatively, the metallic carrier 803, 805 may be positioned in the trench up to a height which is less than a height of the dielectric layer 807. The part of the dielectric layer 807 which is extending higher than the metallic carrier 803, 805 can be removed before or after the provisioning of the SAM 806.

All manufacturing procedures described above, in particular substrate provisioning, dielectric layer positioning and patterning and metallic carrier forming, with exception of SAM positioning, can be performed well known conventional CMOS integration techniques, for example, chemical vapor deposition (CVD), plasma enhanced chemical vapour deposition (PECVD), physical vapor deposition (PVD), atomic layer deposition (ALD), sputtering, electrodeposition or electroless deposition, etc. Removing layers or components may include etching techniques like wet etching, plasma etching, etc., as well as patterning techniques like optical lithography, UV lithography, electron beam lithography, etc.

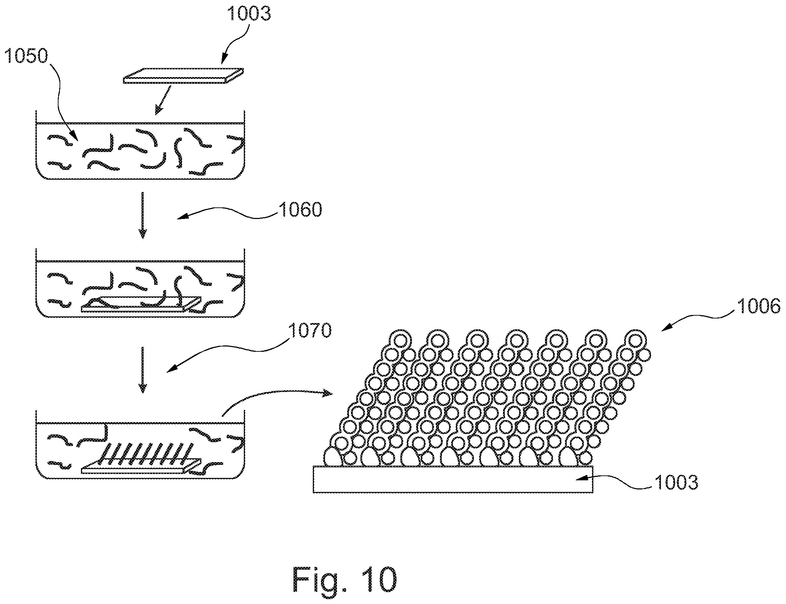

**Fig. 10** illustrates an example of a positioning of a SAM on a metallic carrier. The metallic carrier 1003 is for simplicity represented by an Au layer, which Au layer covers a Si substrate. The SAM is created by the chemisorption, which is an adsorption 1060 characterized by a strong interaction between thiol and a carrier surface, of hydrophilic head groups of thiol molecules onto the metallic carrier immersed in a thiol solution 1050. The adsorption 1060 is followed by a slow two-dimensional organization 1070 of hydrophobic tails of thiol molecules, in which organization 1070 the originally disordered thiol molecules form crystalline or semicrystalline structures on the metallic carrier surface over a period of hours. The hydrophilic head groups assemble together on the carrier surface, while the hydrophobic tail groups assemble away from the carrier. Areas of close-packed thiol molecules nucleate and grow until the carrier surface is covered in a highly ordered single monolayer 1006. A washing off to remove excess thiol solution may be performed at the end of the organization process.

The choice of SAM material, the thickness of the SAM and the packing density of the SAM may determine the type of particles to be detected and the sensitivity of the sensor device to these particles. Hence, the sensitivity of the SAM can be tuned appropriately during the different phases of the process of the SAM positioning.
Finally, it should be noted that the above-mentioned examples illustrate rather than limit the invention, and that those skilled in the art will be capable of designing many alternative examples without departing from the scope of the invention as defined by the appended claims. In the claims, any reference signs placed in parentheses shall not be construed as limiting the claims. The words "comprising" and "comprises", and the like, do not exclude the presence of elements or steps other than those listed in any claim or the specification as a whole. The singular reference of an element does not exclude the plural reference of such elements and vice-versa. In a device claim enumerating several means, several of these means may be embodied by one and the same item of software or hardware. The mere fact that certain measures are recited in mutually different dependent claims does not indicate that a combination of these measures cannot be used to advantage.

## Claims

1. A sensor device (100) for sensing particles, the sensor device (100) being configured as a biosensor and comprising
- a substrate (102) that is a semiconductor substrate; and
- a sensor active region (108) arranged in and/or on the substrate (102) and being sensitive to the presence of the particles to be detected,
wherein the sensor active region (108) comprises
- a metallic carrier (103, 105, 304, 440); and
- a self assembled monolayer (106) positioned on the metallic carrier (103, 105, 304, 440), and
wherein the metallic carrier comprises comb-shaped interdigitated electrodes (103, 105, 303, 305) having a plurality of fingers extending from a base strip,
**characterized in**
**that** the sensor device (100) comprises a heater and/or a temperature sensor,
wherein the metallic carrier additionally comprises a meander-shaped line (304) having a plurality of loops; and
wherein the fingers of the interdigitated electrodes (303, 305) extend between the loops.

2. The sensor device (100) of claim 1, wherein the sensor device (100) is a capacitive sensor device with a capacitor having a capacitance depending on the particles being detected, wherein the metallic carrier (103, 105) forms at least a part of the capacitor.

3. The sensor device of claim 1, wherein the sensor device is a resistive sensor device with a resistor having a resistance depending on the particles being detected, wherein the metallic carrier (304, 440) forms at least a part of the resistor.

4. The sensor device of claim 1, wherein the sensor active region (108) comprises a resonance circuit (640) with a resonance frequency depending on the particles being detected, wherein the metallic carrier (103, 105, 304, 440) forms at least a part of the resonance circuit (640).

5. The sensor device (100) of claim 1, wherein the self assembled monolayer (106) is arranged on an upper surface and on a side surface of the metallic carrier (103, 105, 304, 440), wherein the upper surface of the metallic carrier (103, 105, 304, 440) is the more distant surface of two surfaces of the metallic carrier (103, 105, 304, 440) with respect to the substrate (102), wherein the two surfaces are parallel to a basis of the substrate (102).

6. The sensor device of claim 1, wherein the sensor device further comprises a dielectric layer (807; 907) covering a side surface of the metallic carrier (803, 805; 904).

7. The sensor device of claim 6, wherein the self assembled monolayer (806; 906) is deposited on an upper surface of the metallic carrier (803, 805; 904), wherein the upper surface of the metallic carrier is the more distant surface of two surfaces of the metallic carrier with respect to the substrate (102), wherein the two surfaces are parallel to a basis of the substrate (102).

8. The sensor device (100) according to claim 1, adapted as a sensor chip manufactured in CMOS technology.

9. The sensor device (100) according to claim 1, wherein the biosensor is used for the detection of an analyte comprising biological particles which are DNA, RNA, proteins, enzymes, cells, bacteria, or virus.

10. The sensor device (100) according to claim 1, wherein the biosensor is used to measure a concentration of bio-particles in a fluidic sample comprising biological material.

11. The sensor device (100) according to claim 1, wherein the biosensor combines a biological component realized as capture particles at or in the self assembled monolayer (106) with a physicochemical or physical detector component.

12. A method of manufacturing a sensor device (100) for sensing particles, the sensor device (100) being configured as a biosensor, the method comprising
- providing a substrate (102) that is a semiconductor substrate;
- arranging a sensor active region (108) in and/or on the substrate (102) to be sensitive to the presence of the particles to be detected;
wherein the arranging of the sensor active region (108) comprises
- forming a metallic carrier (103, 105, 304, 440); and
- positioning a self assembled monolayer (106) on the metallic carrier (103, 105, 304, 440),
wherein the metallic carrier comprises comb-shaped interdigitated electrodes (103, 105, 303, 305) having a plurality of fingers extending from a base strip,
**characterized in**
**that** the sensor device (100) comprises a heater and/or a temperature sensor,
wherein the metallic carrier additionally comprises a meander-shaped line (304) having a plurality of loops; and
wherein the fingers of the interdigitated electrodes (303, 305) extend between the loops.

13. The method according to claim 12, further comprising forming a dielectric structure (807; 907) covering side surfaces of the metallic carrier (803, 805; 904).

## Patentansprüche

1. Sensorvorrichtung (100) zum Detektieren von Partikeln, wobei die Sensorvorrichtung (100) als Biosensor ausgelegt ist und
- ein Substrat (102), bei dem es sich um ein Halbleitersubstrat handelt; und
- einen aktiven Sensorbereich (108) aufweist, der in und/oder auf dem Substrat (102) angeordnet und auf das Vorhandensein der nachzuweisenden Partikel empfindlich ist,
wobei der aktive Sensorbereich (108) folgendes aufweist:
- einen metallischen Träger (103, 105, 304, 440); und
- eine selbstorganisierende Monoschicht (106), die auf dem metallischen Träger (103, 105, 304, 440) positioniert ist, und
wobei der metallische Träger kammförmige ineinandergreifende Elektroden (103, 105, 303, 305) mit einer Vielzahl von sich von einem Basisstreifen aus erstreckenden Fingern aufweist,
**dadurch gekennzeichnet, dass**
die Sensorvorrichtung (100) eine Heizeinrichtung und/oder einen Temperatursensor aufweist,
wobei der metallische Träger zusätzlich eine mäanderförmige Leitung (304) mit einer Vielzahl von Schlaufen aufweist; und
wobei die Finger der ineinandergreifenden Elektroden (303, 305) zwischen den Schlaufen verlaufen.

2. Sensorvorrichtung (100) nach Anspruch 1, wobei die Sensorvorrichtung (100) eine kapazitive Sensorvorrichtung mit einem Kondensator ist, der eine Kapazität hat, die von den Partikeln abhängig ist, die nachgewiesen werden, wobei der metallische Träger (103, 105) zumindest einen Teil des Kondensators bildet.

3. Sensorvorrichtung nach Anspruch 1, wobei die Sensorvorrichtung eine widerstandsbehaftete Sensorvorrichtung mit einem Widerstand ist, der einen Widerstandswert hat, welcher von den Partikeln abhängig ist, die nachgewiesen werden, wobei der metallische Träger (304, 440) zumindest einen Teil des Widerstands bildet.

4. Sensorvorrichtung nach Anspruch 1, wobei der aktive Sensorbereich (108) eine Resonanzschaltung (640) mit einer Resonanzfrequenz aufweist, die von den Partikeln abhängig ist, die nachgewiesen werden, wobei der metallische Träger (103, 105, 304, 440) zumindest einen Teil der Resonanzschaltung (640) bildet.

5. Sensorvorrichtung (100) nach Anspruch 1, wobei die selbstorganisierende Monoschicht (106) auf einer oberen Oberfläche und auf einer Seitenfläche des metallischen Trägers (103, 105, 304, 440) angeordnet ist, wobei die obere Oberfläche des metallischen Trägers (103, 105, 304, 440) in Bezug auf das Substrat (102) die weiter entfernte Fläche von zwei Oberflächen des metallischen Trägers (103, 105, 304, 440) ist, wobei die beiden Oberflächen parallel zu einer Basis des Substrats (102) sind.

6. Sensorvorrichtung nach Anspruch 1, wobei die Sensorvorrichtung darüber hinaus eine dielektrische Schicht (807; 907) aufweist, die eine Seitenfläche des metallischen Trägers (803, 805; 904) bedeckt.

7. Sensorvorrichtung nach Anspruch 6, wobei die selbstorganisierende Monoschicht (806; 906) auf einer oberen Oberfläche des metallischen Trägers (803, 805; 904) abgeschieden ist, wobei die obere Oberfläche des metallischen Trägers in Bezug auf das Substrat (102) die weiter entfernte Fläche von zwei Oberflächen des metallischen Trägers ist, wobei die beiden Oberflächen parallel zu einer Basis des Substrats (102) sind.

8. Sensorvorrichtung (100) nach Anspruch 1, die als Sensorchip eingerichtet ist, der in CMOS-Technologie hergestellt ist.

9. Sensorvorrichtung (100) nach Anspruch 1, wobei der Biosensor zum Nachweis eines Analyten dient, der biologische Partikel aufweist, bei denen es sich um DNA, RNA, Proteine, Enzyme, Zellen, Bakterien oder Viren handelt.

10. Sensorvorrichtung (100) nach Anspruch 1, wobei der Biosensor zur Messung einer Konzentration von Bio-Partikeln in einer fluidischen Probe verwendet wird, die biologisches Material enthält.

11. Sensorvorrichtung (100) nach Anspruch 1, wobei der Biosensor eine biologische Komponente, die als Einfangpartikel an oder in der selbstorganisierenden Monoschicht (106) realisiert ist, mit einer physikalischchemischen oder physikalischen Detektorkomponente kombiniert.

12. Verfahren zur Herstellung einer Sensorvorrichtung (100) zum Detektieren von Partikeln, wobei die Sensorvorrichtung (100) als Biosensor konfiguriert ist, wobei das Verfahren umfasst:
- Bereitstellen eines Substrats (102), bei dem es sich um ein Halbleitersubstrat handelt;
- Anordnen eines aktiven Sensorbereichs (108) in und/oder auf dem Substrat (102), der auf das Vorhandensein der nachzuweisenden Partikel empfindlich ist;
wobei das Anordnen des aktiven Sensorbereichs (108) umfasst:
- Bilden eines metallischen Trägers (103, 105, 304, 440); und
- Positionieren einer selbstorganisierenden Monoschicht (106) auf dem metallischen Träger (103, 105, 304, 440),
wobei der metallische Träger kammförmige ineinandergreifende Elektroden (103, 105, 303, 305) mit einer Vielzahl von sich von einem Basisstreifen aus erstreckenden Fingern aufweist,
**dadurch gekennzeichnet, dass**
die Sensorvorrichtung (100) eine Heizeinrichtung und/oder einen Temperatursensor aufweist,
wobei der metallische Träger zusätzlich eine mäanderförmige Leitung (304) mit einer Vielzahl von Schlaufen aufweist; und
wobei die Finger der ineinandergreifenden Elektroden (303, 305) zwischen den Schlaufen verlaufen.

13. Verfahren nach Anspruch 12, darüber hinaus das Bilden einer dielektrischen Struktur (807; 907) umfassend, die Seitenflächen des metallischen Trägers (803, 805; 904) bedeckt.

## Revendications

1. Dispositif de capteur (100) destiné à détecter des particules, le dispositif de capteur (100) étant configuré comme biocapteur et comprenant
- un substrat (102) qui est un substrat semiconducteur ; et
- une région active de capteur (108) agencée dans et/ou sur le substrat (102) et sensible à la présence des particules à détecter,
sachant que la région active de capteur (108) comprend
- un support métallique (103, 105, 304, 440) ; et
- une monocouche autoassemblée (106) positionnée sur le support métallique (103, 105, 304, 440), et
sachant que le support métallique comprend des électrodes interdigitées (103, 105, 303, 305) en forme de peigne présentant une pluralité de doigts s'étendant depuis une languette de base,
**caractérisé en ce que**
le dispositif de capteur (100) comprend un chauffage et/ou un capteur de température,
sachant que le support métallique comprend en outre une ligne en forme de méandre (304) présentant une pluralité de boucles ; et
sachant que les doigts des électrodes interdigitées (303, 305) s'étendent entre les boucles.

2. Le dispositif de capteur (100) de la revendication 1, sachant que le dispositif de capteur (100) est un dispositif de capteur capacitif comprenant un condensateur ayant une capacitance dépendant des particules qui sont détectées, sachant que le support métallique (103, 105) forme au moins une partie du condensateur.

3. Le dispositif de capteur de la revendication 1, sachant que le dispositif de capteur est un dispositif de capteur résistif comprenant une résistance ayant une valeur ohmique dépendant des particules qui sont détectées, sachant que le support métallique (304, 440) forme au moins une partie de la résistance.

4. Le dispositif de capteur de la revendication 1, sachant que la région active de capteur (108) comprend un circuit de résonance (640) ayant une fréquence de résonance dépendant des particules qui sont détectées, sachant que le support métallique (103, 105, 304, 440) forme au moins une partie du circuit de résonance (640).

5. Le dispositif de capteur (100) de la revendication 1, sachant que la monocouche autoassemblée (106) est agencée sur une surface supérieure et sur une surface latérale du support métallique (103, 105, 304, 440), sachant que la surface supérieure du support métallique (103, 105, 304, 440) est la surface la plus distante de deux surfaces du support métallique (103, 105, 304, 440) par rapport au substrat (102), sachant que les deux surfaces sont parallèles à une base du substrat (102).

6. Le dispositif de capteur de la revendication 1, sachant que le dispositif de capteur comprend en outre une couche de diélectrique (807 ; 907) recouvrant une surface latérale du support métallique (803, 805 ; 904).

7. Le dispositif de capteur de la revendication 6, sachant que la monocouche autoassemblée (806 ; 906) est déposée sur une surface supérieure du support métallique (803, 805 ; 904), sachant que la surface supérieure du support métallique est la surface la plus distante de deux surfaces du support métallique par rapport au substrat (102), sachant que les deux surfaces sont parallèles à une base du substrat (102).

8. Le dispositif de capteur (100) selon la revendication 1, adapté comme puce de capteur fabriquée en technologie CMOS.

9. Le dispositif de capteur (100) selon la revendication 1, sachant que le biocapteur est utilisé pour la détection d'un analyte comprenant des particules biologiques qui sont de l'ADN, de l'ARN, des protéines, des enzymes, des cellules, des bactéries, ou des virus.

10. Le dispositif de capteur (100) selon la revendication 1, sachant que le biocapteur est utilisé pour mesurer une concentration de bioparticules dans un échantillon fluidique comprenant du matériau biologique.

11. Le dispositif de capteur (100) selon la revendication 1, sachant que le biocapteur combine un composant biologique réalisé comme particules de capture au niveau de ou dans la monocouche autoassemblée (106) avec un composant détecteur physicochimique ou physique.

12. Procédé de fabrication d'un dispositif de capteur (100) destiné à détecter des particules, le dispositif de capteur (100) étant configuré comme biocapteur, le procédé comprenant
- la mise à disposition d'un substrat (102) qui est un substrat semiconducteur ;
- l'agencement d'une région active de capteur (108) dans et/ou sur le substrat (102) pour être sensible à la présence des particules à détecter ;
sachant que l'agencement de la région active de capteur (108) comprend
- la formation d'un support métallique (103, 105, 304, 440) ; et
- le positionnement d'une monocouche autoassemblée (106) sur le support métallique (103, 105, 304, 440),
sachant que le support métallique comprend des électrodes interdigitées (103, 105, 303, 305) en forme de peigne présentant une pluralité de doigts s'étendant depuis une languette de base,
**caractérisé en ce que**
le dispositif de capteur (100) comprend un chauffage et/ou un capteur de température,
sachant que le support métallique comprend en outre une ligne en forme de méandre (304) présentant une pluralité de boucles ; et
sachant que les doigts des électrodes interdigitées (303, 305) s'étendent entre les boucles.

13. Le procédé selon la revendication 12, comprenant en outre la formation d'une structure de diélectrique (807 ; 907) recouvrant des surfaces latérales du support métallique (803, 805 ; 904).
